# EUROPÄISCHE PATENTSCHRIFT

(11) **EP 3 231 976 B1**
(45) Veröffentlichungstag und Bekanntmachung des Hinweises auf die Patenterteilung: **26.12.2018**
(21) Anmeldenummer: 17166271.1
(22) Anmeldetag: 12.04.2017
(51) Int. Cl.: E05F 15/611

(54) **DREHANTRIEB MIT EINER SICHERHEITSSCHALTUNG**
ROTARY DRIVE WITH A SAFETY CIRCUIT
DISPOSITIF D'ENTRAINEMENT ROTATIF AVEC UN CIRCUIT DE SÉCURITÉ

(30) Priorität: 15.04.2016 DE 102016206415
(43) Veröffentlichungstag der Anmeldung: 18.10.2017
(73) Patentinhaber: Stabilus GmbH, 56070 Koblenz (DE)
(72) Erfinder: Bochen, Marian, 56337 Eitelborn (DE)
(74) Vertreter: Weickmann & Weickmann PartmbB

(56) Entgegenhaltungen:
- DE-A1- 19 508 880
- DE-B4-102009 042 456

## Beschreibung

Die Erfindung bezieht sich auf eine Antriebseinrichtung, insbesondere für eine Klappe eines Fahrzeugs, mit einem mit einem Basisteil oder mit einem bewegbaren Bauteil verbindbaren Gehäuserohr, einem mit dem bewegbaren Bauteil oder mit dem Basisteil verbindbaren Schutzrohr, einem eine Gewindespindel und eine auf der Gewindespindel angeordnete Spindelmutter aufweisenden Spindeltrieb, durch den das Gehäuserohr und das Schutzrohr axial relativ zueinander bewegbar sind, und einem den Spindeltrieb drehbar antreibenden, wenigstens einen Elektromotor umfassenden Drehantrieb.

Derartige Antriebseinrichtungen sind in einer Vielzahl von Variationen bekannt. Sie werden insbesondere in Kraftfahrzeugen beispielsweise zum Schließen und Öffnen von Motorhauben, Heckklappen, Kofferraumdeckeln, Türen und dergleichen schwenkbaren Elementen eingesetzt. Eine gattungsgemäße Antriebseinrichtung ist beispielsweise in der DE 10 2007 054 448 B3 der Anmelderin offenbart. Die Antriebseinheit derartiger Antriebseinrichtungen verfügt üblicherweise neben der Motorbaugruppe auch über eine Getriebebaugruppe, welche die Drehbewegung der Motorbaugruppe untersetzt und an eine Stellbaugruppe der Antriebseinrichtung, beispielsweise einen Spindeltrieb, weiterleitet. Nachteilig bei diesen Antrieben ist jedoch, dass diese im manuellen Betrieb oder durch manuellen Eingriff während des automatischen Betriebs mit hohen Kräften belastet werden. Im Einzelfall können die fremd eingeführten Kräfte die üblichen, applikationsbedingten Kräfte im Antriebssystem um ein vielfaches überschreiten, wodurch verschiedene Bauteile der Antriebseinrichtungen beschädigt werden können.

Des Weiteren ist aus der DE 20 2005 007 155 U1 ein Verstellsystem bekannt, bei dem eine zwischen dem Elektromotor und einem Getriebe eingesetzte Bremse eine Bremswirkung ermöglicht, die sowohl durch eine manuelle Krafteinwirkung auf die Heckklappe als auch durch elektromotorische Kraft des Elektromotors aufhebbar ist. Dies wird dadurch erreicht, dass das vom Elektromotor abgegebene Moment abzüglich einer geringen Reibung der Bremse auf das Getriebe übertragen wird. Dies hat den nach Nachteil, dass die Bremse einem ständigen Verschleiß unterliegt.
Der hinsichtlich der vorliegenden Erfindung nächst gelegene Stand der Technik ergibt sich aus der DE 10 2009 042 456 B4 der Anmelderin. Dort ist bereits ein Drehantrieb mit einer Antriebseinrichtung offenbart, wobei die Antriebseinrichtung eine Sicherheitsschaltung umfasst, die bei deaktiviertem Drehantrieb bei von außen in die Antriebseinrichtung eingebrachten Fremdkräften bei Überschreiten einer Grenzdrehzahl eine Bremswirkung auf den Drehantrieb bewirkt.

Um Bauraum in der Antriebseinrichtung zu sparen und um die Montage zu vereinfachen, kann die Sicherheitsschaltung auf einer Elektronikplatine im Gehäuserohr angeordnet sein, die einer Drehzahl- und Drehrichtungssensorik zugeordnet ist, wobei die die Sicherheitsschaltung unabhängig von der Drehzahl- und Drehrichtungssensorik bzw. deren elektrischen Signalen arbeitet.

Alternativ kann die Sicherheitsschaltung in einer Zuleitung oder in einem Stecker der Zuleitung der Antriebseinrichtung angeordnet sein.

Die Sicherheitsschaltung umfasst wenigstens einen Triac, durch den die Wicklung des Elektromotors kontinuierlich kurzschließbar ist, wodurch unangenehmes Ruckeln, welches sich auch nachteilig auf die eingebauten Bauteile auswirkt, vermieden wird, da ein Triac erst dann den Stromkreis unterbricht, wenn der Laststrom bzw. der vom Elektromotor generierte Kurzschlussstrom gleich Null ist.
Gemäß diesem Stand der Technik war eine erhebliche Anzahl von Bauelementen (mindestens zwei Triacs und zwei Zener-Dioden bzw. ein Triac, eine Zener-Diode und vier Dioden) zur Verwirklichung der erfindungsgemäßen Sicherheitsschaltung erforderlich. Da diese Sicherheitsschaltung innerhalb der vorhandenen Gehäuse, Platinen bzw. Verdrahtungen und Kabelräume angeordnet werden muss, ist eine Reduzierung der Zahl der nötigen Bauelemente dringend erforderlich. Insbesondere sollte möglichst nur ein Triac, welches als Bauelement der Leistungselektronik besonders viel Platz und ggf. auch Kühlvorrichtungen benötigt, verwendet werden. Ausgehend von diesem Stand der Technik ist es daher Aufgabe der vorliegenden Erfindung, einen gattungsgemäßen Drehantrieb dergestalt weiterzubilden, dass lediglich eine minimale Anzahl von elektronischen Bauelementen und insbesondere nur ein Triac zur Realisierung der Sicherheitsschaltung erforderlich ist, ohne dass die Funktionalität der Sicherheitsschaltung in irgendeiner Weise eingeschränkt wird.
Erfindungsgemäß wird diese Aufgabe bei einem gattungsgemäßen Drehantrieb dadurch gelöst, dass lediglich ein Triac zwischen den Anschlüssen der Wicklung des Drehantriebs vorgesehen ist, dessen Gate über zwei antiparallel in Serie geschaltete Zener-Dioden mit einem der Anschlüsse verbunden ist.
Zusätzlich kann ein Widerstand in Serie mit den Zener-Dioden vorgesehen sein, um den Auslösepunkt der Sicherheitsschaltung genauer einzustellen. Dieser Widerstand kann beispielsweise einstellbar sein (als Potenziometer) oder temperaturabhängig (als PTC- oder NTC-Widerstand).
Auf letztere Weise kann die Auslösecharakteristik der Sicherheitsschaltung temperaturabhängig gestaltet werden.
Im Folgenden wird die vorliegende Erfindung anhand der folgenden Zeichnungen näher beschrieben. Es zeigen:
Fig. 1 eine schematische Darstellung eines Kraftfahrzeugs mit schwenkbar angetriebenen Heckklappe;
Fig. 2 einen Querschnitt einer Antriebseinrichtung;
Fig. 3 eine Ausführungsform der Sicherheitsschaltung der vorliegenden Erfindung; und
Fig. 4 eine weitere Ausführungsform der Sicherheitsschaltung gemäß der vorliegenden Erfindung.

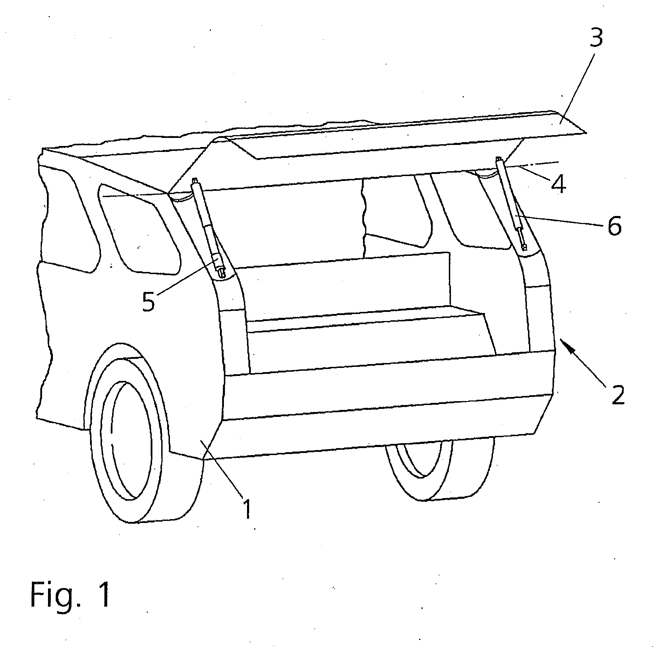

Die Fig. 1 zeigt die Prinzipskizze eines Kraftfahrzeuges mit einer Karosserie als Basisteil 1 und einem eine Öffnung 2 des Basisteils 1 verschließenden oder öffnenden, bewegbaren Bauteil 3 in der Ausführung als Heckklappe.

Es sei bemerkt, dass es sich bei dem relativ zum Basisteil 1 bewegbaren Bauteil auch um eine Front- oder Motorhaube, eine Fahrzeugtüroder eine entsprechende Anwendung handeln kann.

Das bewegbare Bauteil 3 ist in einer quer zum Fahrzeug verlaufenden horizontalen Schwenkachse 4 gelagert. An einer Seite des bewegbaren Bauteils 3 ist eine erste Antriebseinrichtung 5 , an der gegenüberliegenden Seite der Klappe 3 eine zweite Antriebseinrichtung 6 angeordnet.

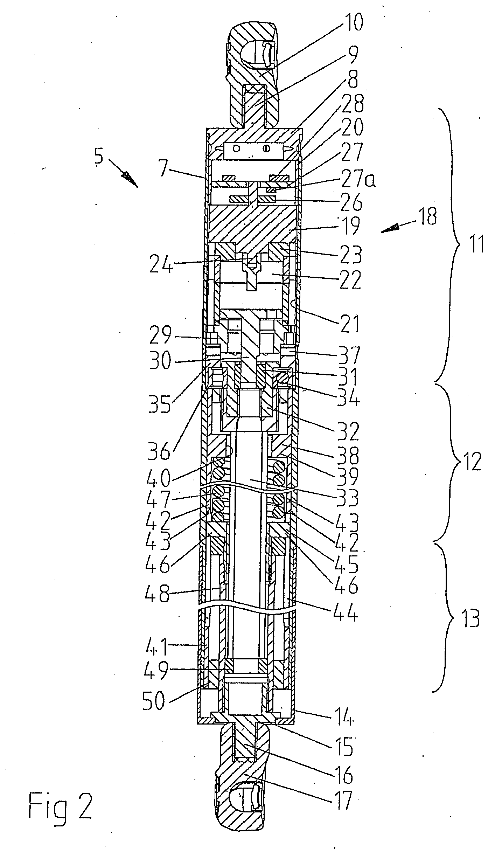

Die Fig. 2 zeigt eine beispielhafte Ausführungsform einer der beiden Antriebseinrichtungen in Form einer elektromechanischen Antriebseinrichtung, die in der nachstehenden Beschreibung der Einfachheit wegen der ersten Antriebseinrichtung 5 zugeordnet wird. Bei der zweiten Antriebseinrichtung 6 kann es sich ebenfalls um eine elektromechanische Antriebseinrichtung oder aber, wie in Fig. 1 gezeigt, um eine Gasfeder handeln.

Die erste Antriebseinrichtung 5 besitzt ein Gehäuserohr 7 , das an einem Ende durch ein Bodenstück 8 verschlossen ist. Das Bodenstück 8 weist einen Gewindezapfen 9 auf, auf den ein Anschlusselement 10 geschraubt ist.

Das Gehäuserohr 7 weist einen ersten Abschnitt 11, einen zweiten Abschnitt 12 und einen dritten Abschnitt 13 auf. Der erste Abschnitt 11 weist bei gleich bleibendem Außendurchmesser einen größeren Innendurchmesser als der zweite Abschnitt 12 auf. Der dritte Abschnitt 13 weist hingegen bei gleich bleibendem Innendurchmesser einen kleineren Außendurchmesser als der zweite Abschnitt 12 auf.

Über den dritten Abschnitt 13 des Gehäuserohrs 7 ist ein Schutzrohr 14 angeordnet, dessen Außendurchmesser im Wesentlichen dem Außendurchmesser des zweiten Abschnitts 12 des Gehäuserohrs 7 entspricht. Das Schutzrohr 14 ist an seinem dem Gehäuserohr 7 abgewandten Ende durch ein Bodenstück 15 verschlossen. Das Bodenstück 15 weist einen Gewindezapfen 16 auf, auf den ein Anschlusselement 17 geschraubt ist. Mit den Anschlusselementen 10 und 17 ist die erste Antriebseinrichtung 5 mit einem feststehenden Karosseriebauteil bzw. Basisteil 1 eines Kraftfahrzeugs und mit einem als Klappe ausgebildeten bewegbaren Bauteil 3 des Kraftfahrzeugs gelenkig verbindbar.

Im Inneren des Gehäuserohrs 7 ist im Bereich des ersten Abschnitts 11 ein Drehantrieb 18 angeordnet. Der Drehantrieb 18 umfasst einen Elektromotor 19, eine in einem Sensorgehäuse 20 untergebrachte Sensoreinrichtung und ein in einem Getriebegehäuse 21 untergebrachtes Getriebe 22. Der Elektromotor 19 stützt sich über das Sensorgehäuse 20 an dem durch das Bodenstück 8 verschlossenen Ende des Gehäuserohrs 7 ab. Über ein Adapterelement 23 stützt sich das Getriebegehäuse 21 an dem Elektromotor 19 ab. Das in dem Getriebegehäuse 21 angeordnete Getriebe 22 wird von einer Motorantriebswelle 24 angetrieben. Die Motorantriebswelle 24 ragt außerdem auf der dem Getriebegehäuse 21 gegenüberliegenden Seite in das Sensorgehäuse 20. Vom Sensorgehäuse 20 erstrecken sich die nicht gezeigten, Energieversorgungs- und Steuerleitungen umfassenden Anschlussleitungen durch das Bodenstück 8 aus dem Gehäuserohr 7, über die der Elektromotor 19 mit einer nicht dargestellten Energiequelle, insbesondere einer Autobatterie oder einer Steuerungseinrichtung, verbindbar ist.

Die in das Sensorgehäuse 20 ragende Motorantriebswelle 24 trägt einen Dauermagneten 26, der axial einer nahe dem freien Ende der Motorantriebswelle 24 am Sensorgehäuse 20 oder alternativ am Gehäuserohr 7 feststehend angebrachten Elektronikplatine 27 gegenüberliegt. Die Elektronikplatine 27 weist auf der dem Dauermagneten 26 zugewandten Seite wenigstens ein Hallelement 27a einer Drehzahl- und Drehrichtungssensorik auf. Auf der dem Dauermagneten 26 abgewandten Seite der Elektronikplatine 27 ist eine erfindungsgemäße Sicherheitsschaltung 28 angeordnet.

Das Getriebegehäuse 21 ist an der dem Elektromotor 19 gegenüberliegenden Seite durch einen Gehäusedeckel 29 verschlossen, durch den
sich eine Getriebewelle 30 erstreckt. Das Ende der Getriebewelle 30 ist mit einem Spindeltrieb verbunden. Am Ende der Getriebewelle 30 befindet sich dazu ein Adaptereinsatz 31, an dem ein Spindeladapter 32 angeordnet ist. Mit dem Adaptereinsatz 31 und dem Spindeladapter 32 wird eine Gewindespindel 33 mit der Getriebewelle 30 verbunden.

Der Spindeladapter 32 ist in einem Lager 34 gelagert. Das Lager 34 wiederum ist in einer Lagerhülse 35 angeordnet, die sich einerseits am Getriebegehäuse 21 oder am Gehäusedeckel 29 abstützt und andererseits an einer Stufe 36 anliegt, die durch die unterschiedlichen Innendurchmesser der Abschnitte 11 und 12 gebildet wird. Somit ist der Drehantrieb 18 zusammen mit dem Lager 34 der Gewindespindel 33 in axialer Richtung innerhalb des ersten Abschnitts 11 des Gehäuserohrs 7 fixiert. Mittels Schrauben 37 oder Knaggen können Teile des Drehantriebs 18 so mit dem Gehäuserohr 7 verbunden werden, dass diese sich gegenüber dem Gehäuserohr 7 nicht verdrehen können.

An dem Lager 34 oder an der Lagerhülse 35 stützt sich, im Wesentlichen im zweiten Abschnitt 12 an der Innenwand des Gehäuserohrs 7 anliegend, eine Federhülse 38 ab. Im Inneren der Federhülse 38 ist eine Wandung 39 mit einer Bohrung 40 ausgebildet, durch welche die Gewindespindel 33 hindurchragt. Die Federhülse 38 wird ausgehend vom zweiten Abschnitt 12 des Gehäuserohrs 7 in Richtung dritter Abschnitt 13 durch ein Führungsrohr 41 bis zum Ende des Gehäuserohrs 7 verlängert. Die Federhülse 38 weist an ihrem dem Führungsrohr 41 nahen Ende Ausnehmungen 42 auf, in welche an dem der Federhülse 38 nahen Ende des Führungsrohrs 41 ausgebildete Vorsprünge 43 eingreifen und somit verhindern, dass sich Federhülse 38 und Führungsrohr 41 gegeneinander verdrehen können. Das Führungsrohr 41 weist des Weiteren wenigstens eine sich in axialer Richtung erstreckende, als Schlitz ausgebildete Führungseinrichtung 44 auf, in den ein an einer Spindelmutter 45 ausgebildeter Vorsprung 46 hineinragt.

Ein die Gewindespindel 33 teilweise umgebendes Federelement 47 erstreckt sich von der dem Lager 34 abgewandten Seite der Wandung 39 in Richtung dritter Abschnitt 13 des Gehäuserohrs 7 und kommt an der auf der Gewindespindel 33 laufenden Spindelmutter 45 zur Anlage, insbesondere dann, wenn die erste Antriebseinrichtung 5 eingeschoben ist, d. h. sich die Klappe 3 in ihrer nahezu vollständig geschlossenen Position befindet. Das Federelement 47 versucht die Spindelmutter 45 beim Öffnen der Klappe 3 aus deren vollständig geschlossener Position von der Wandung 39 wegzudrängen und unterstützt somit den Drehantrieb 18 wenigstens während der ersten Zentimeter der Klappenöffnungsbewegung.

Mit der Spindelmutter 45 wird ein Spindelrohr 48 in dem Führungsrohr 41 axial beweglich geführt, wobei sich das Spindelrohr 48 mit einem Ende an der Spindelmutter 45 abstützt und mit seinem anderen Ende an dem Bodenstück 15 des Schutzrohres 14 angebracht ist. Die Gewindespindel 33 weist an dem Bodenstück 15 nahen Ende einen in dem Spindelrohr 48 angeordneten Führungsring 49 auf, wodurch ein radiales Schwingen der Gewindespindel 33 vermieden wird.

Zwischen Spindelrohr 48 und dem dem Anschlusselement 17 nahen Ende des Gehäuserohrs 7 ist ein weiterer Führungsring 50 angeordnet, der ebenfalls ein radiales Schwingen der teleskopisch ausfahrbaren Bauteile verhindert und einen stabilen Knickschutz bildet.

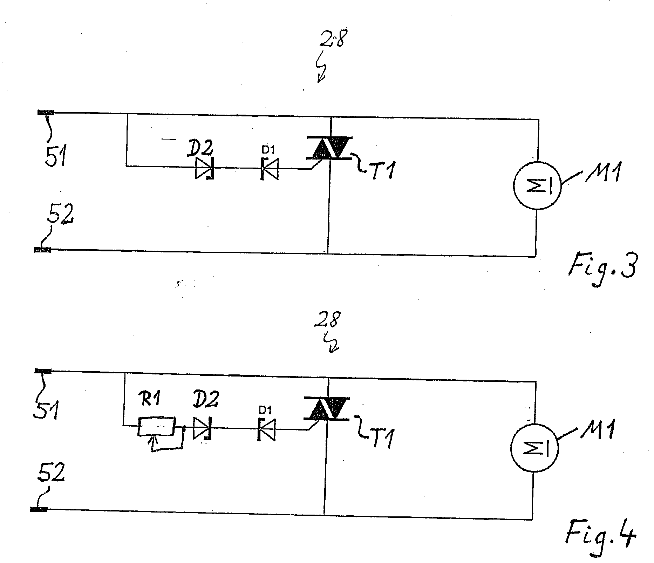

Fig. 3 zeigt einen Schaltplan einer ersten Ausführungsform der erfindungsgemäßen Sicherheitsschaltung 28. Die Wicklung eines Elektromotors M1 ist mit den Anschlusskontakten 51 und 52 verbunden. Diese beiden Anschlüsse können beispielsweise mit einer geeigneten Steuerungseinrichtung verbunden sein, über die der Elektromotor M1 angesteuert und mit Strom versorgt wird. Parallel zu der Wicklung des Motors M1 ist ein Triac T1 geschaltet. Das Gate des Triacs T1 ist über zwei antiparallel in Serie geschaltete Zener-Dioden D1 und D2 mit einem der Anschlüsse 51 oder 52 verbunden.

Die vorliegende Erfindung macht hierbei von der Eigenschaft des Triacs Gebrauch, in beide Stromrichtungen zu wirken und durch Steuerströme in beiden Richtungen geschaltet werden zu können. Durch die antiparallel hintereinandergeschalteten Zener-Dioden D1 und D2 wird die Stromzufuhr zu dem Gate des Triacs T1 bei jeder Stromrichtung gesperrt. Lediglich wenn die Spannung die Durchbruchspannung der Zener-Dioden überschreitet, wird unabhängig von der Stromrichtung und damit von der Polarität des von der Wicklung des Motors M1 durch eine Fremdlast erzeugten Stroms das Triac T1 durchgeschaltet, indem die in der jeweiligen Stromrichtung in Sperrrichtung beaufschlagte Zener-Diode leitend wird, während die in Durchlassrichtung beaufschlagte Zener-Diode sowieso bereits leitend ist. Sobald das Triac T1 leitend wird, schließt es die Wicklung des Motors M1 kurz, wodurch dieser als Motorbremse bis zum Stillstand der Klappe wirkt, da das einmal gezündete Triac im leitenden Zustand verbleibt, bis der Strom durch das Triac zu fließen aufhört. Erst dann sperrt das Triac wieder und der Elektromotor beendet damit seinen Bremsbetrieb. Auf diese Weise wird sichergestellt, dass die Klappe nach einer Bewegung durch Fremdkraft und Überschreiten einer Grenzgeschwindigkeit erst zum vollständigen Stillstand kommt, bevor die Bremswirkung aufhört, und bevor die Klappe durch den Elektromotor M1 wieder aktiv bewegt werden kann.

Wie aus dem Schaltplan der Fig. 3 ersichtlich, ist die erfindungsgemäße Beschaltung der Wicklung des Motors M1 hinsichtlich der Zahl der notwendigen Bauelemente optimiert. Im Gegensatz zum Stand der Technik wird nur noch ein Triac und zwei Zener-Dioden benötigt. Dadurch werden erhebliche Kosten bei der Fertigung, aber insbesondere Platz in den jeweiligen Einbauorten eingespart.

Fig. 4 zeigt eine weitere Ausführungsform der vorliegenden Erfindung. Dabei ist zusätzlich zu den beiden antiparallelen Zener-Dioden D1 und D2 noch ein Widerstand R1 in Reihe geschaltet. Bei dem Widerstand R1 kann es sich um einen einfachen Ohm'schen Widerstand handeln, vorzugsweise wird aber ein verstellbarer Widerstand (Potenziometer) R1 gewählt, oder aber ein Widerstand mit positivem oder negativem Temperaturkoeffizienten. Auf diese Weise kann die Auslösekraft für die Sicherheitsschaltung genau eingestellt werden bzw. temperaturabhängig gestaltet werden. Dies erlaubt erhebliche weitere Freiheitsgrade bei der Ausgestaltung der Sicherheitsschaltung.

Erfindungsgemäß kann die Sicherheitsschaltung also soweit vereinfacht und verkleinert werden, dass diese zusätzlich auf der vorhandenen Motorplatine, am oder im Motor oder am oder im Stecker angeordnet werden kann, je nach dem wo noch Bauraum zur Verfügung steht.

### Bezugszeichenliste:

- 1: Basisteil
- 2: Öffnung
- 3: Klappe
- 4: Schwenkachse
- 5: erste Antriebseinrichtung
- 6: zweite Antriebseinrichtung
- 7: Gehäuserohr
- 8: Bodenstück
- 9: Gewindezapfen
- 10: Anschlusselement
- 11: erster Abschnitt
- 12: zweiter Abschnitt
- 13: dritter Abschnitt
- 14: Schutzrohr
- 15: Bodenstück
- 16: Gewindezapfen
- 17: Anschlusselement
- 18: Drehantrieb
- 19,: M1 Elektromotor
- 20: Sensorgehäuse
- 21: Getriebegehäuse
- 22: Getriebe
- 23: Adapterelement
- 24: Motorantriebswelle
- 26: Dauermagnet
- 27: Elektronikplatine
- 27a: Hallelement
- 28: Sicherheitsschaltung
- 29: Gehäusedeckel
- 30: Getriebewelle
- 31: Adaptereinsatz
- 32: Spindeladapter
- 33: Gewindespindel
- 34: Lager
- 35: Lagerhülse
- 36: Stufe
- 37: Schraube
- 38: Federhülse
- 39: Wandung
- 40: Bohrung
- 41: Führungsrohr
- 42: Ausnehmung
- 43: Vorsprung
- 44: Führungseinrichtung
- 45: Spindelmutter
- 46: Vorsprung
- 47: Federelement
- 48: Spindelrohr
- 49: Führungsring
- 50: Führungsring
- 51: erster Anschlusskontakt
- 52: zweiter Anschlusskontakt
- T1: Triac
- R1: Widerstand
- D1: Z-Diode
- D2: Z-Diode

## Patentansprüche

1. Drehantrieb (18), insbesondere für eine Klappe eines Fahrzeugs, umfassend eine Sicherheitsschaltung (28) für den Drehantrieb (18), die bei deaktiviertem Drehantrieb (18) und von außen auf die Klappe aufgebrachten Fremdkräften eine Bremswirkung auf den Drehantrieb (18) bewirkt, wobei der Drehantrieb (18) mindestens einen Elektromotor (M1) umfasst, dessen Wicklung mit Anschlusskontakten (51, 52) verbunden ist und durch mindestens einen Triac (T1) kurzschließbar ist, wobei der mindestens eine Triac (T1) parallel zu der Wicklung des Motors (M1) geschaltet ist, **dadurch gekennzeichnet, dass** lediglich ein Triac (T1) zwischen den Anschlüssen (51, 52) der Wicklung vorgesehen ist, dessen Gate über zwei antiparallel in Serie geschaltete Zener-Dioden (D1, D2) mit einem der Anschlüsse (51, 52) verbunden ist.

2. Drehantrieb (18) nach Anspruch 1, **dadurch gekennzeichnet, dass** zusätzlich ein Widerstand (R1) in Serie mit den Zener-Dioden (D1, D2) geschaltet ist.

3. Drehantrieb (18) nach Anspruch 2, **dadurch gekennzeichnet, dass** der Widerstand (R1) einen einstellbaren Widerstandswert aufweist.

4. Drehantrieb (18) nach einem der Ansprüche 1 bis 3, **dadurch gekennzeichnet, dass** die Sicherheitsschaltung (28) auf einer Elektronikplatine (27) in einem Gehäuserohr (7) des Drehantriebs (18) angeordnet ist, die einer Drehzahl- und Drehrichtungssensorik zugeordnet ist, wobei die Sicherheitsschaltung (28) unabhängig von der Drehzahl- und Drehrichtungssensorik bzw. deren elektrischen Signalen arbeitet.

5. Drehantrieb (18) nach einem der Ansprüche 1 bis 3, **dadurch gekennzeichnet, dass** die Sicherheitsschaltung (28) in einer Zuleitung einer Antriebseinrichtung (5) des Drehantriebs (18) angeordnet ist.

6. Drehantrieb (18) nach einem der Ansprüche 1 bis 3, **dadurch gekennzeichnet, dass** die Sicherheitsschaltung (28) in einem Stecker einer Zuleitung einer Antriebseinrichtung (5) des Drehantriebs (18) angeordnet ist.

7. Drehantrieb (18) nach einem der Ansprüche 1 bis 3, **dadurch gekennzeichnet, dass** die Sicherheitsschaltung (28) auf einer vorhandenen Motorplatine angeordnet ist.

8. Drehantrieb (18) nach einem der Ansprüche 1 bis 3, **dadurch gekennzeichnet, dass** die Sicherheitsschaltung im Motor (19) angeordnet ist.

## Claims

1. Rotary drive (18), in particular for a vehicle hatch, comprising a safety circuit (28) for the rotary drive (18), which circuit has a braking effect on the rotary drive (18) when the rotary drive (18) is deactivated and external forces are applied to the hatch from the outside, the rotary drive (18) comprising at least one electric motor (M1), the winding of which is connected to connection contacts (51, 52) and can be short-circuited by at least one triac (T1), the at least one triac being connected in parallel with the winding of the motor (M1),
**characterised in that** just one triac (T1) is provided between the connections (51, 52) of the winding, the gate of which triac is connected to one of the connections (51, 52) by two Zener diodes (D1, D2) that are connected in series in an anti-parallel manner.

2. Rotary drive (18) according to claim 1, **characterised in that** a resistor (R1) is also connected in series with the Zener diodes (D1, D2).

3. Rotary drive (18) according to claim 2, **characterised in that** the resistor (R1) has an adjustable resistance value.

4. Rotary drive (18) according to any of claims 1 to 3, **characterised in that** the safety circuit (28) is arranged on an electronic circuit board (27) in a housing tube (7) of the rotary drive (18), which circuit board is allocated to a rotational-speed and rotational-direction sensor system, the safety circuit (28) operating independently of the rotational-speed and rotational-direction sensor system and the electrical signals therefrom.

5. Rotary drive (18) according to any of claims 1 to 3, **characterised in that** the safety circuit (28) is arranged in a supply line of a drive device (5) of the rotary drive (18).

6. Rotary drive (18) according to any of claims 1 to 3, **characterised in that** the safety circuit (28) is arranged in a plug of a supply line of a drive device (5) of the rotary drive (18).

7. Rotary drive (18) according to any of claims 1 to 3, **characterised in that** the safety circuit (28) is arranged on an existing circuit board of the motor.

8. Rotary drive (18) according to any of claims 1 to 3, **characterised in that** the safety circuit is arranged in the motor (19).

## Revendications

1. Dispositif d'entraînement rotatif (18), en particulier pour une trappe d'un véhicule, comprenant un circuit de sécurité (28) pour le dispositif d'entraînement rotatif (18) qui provoque en cas de dispositif d'entraînement rotatif (18) désactivé et de forces externes appliquées de l'extérieur sur la trappe, une action de freinage sur le dispositif d'entraînement rotatif (18), dans lequel le dispositif d'entraînement rotatif (18) comporte au moins un moteur électrique (M1) dont l'enroulement est raccordé aux contacts de raccordement (51, 52) et peut être court-circuité par au moins un triac (T1),
dans lequel l'au moins un triac (T1) est monté parallèlement à l'enroulement du moteur (M1),
**caractérisé en ce que** seulement un triac (T1) est prévu entre les raccords (51, 52) de l'enroulement, dont la grille est raccordée par le biais de deux diodes de Zener (D1, D2) montées de manière antiparallèle en série à un des raccords (51, 52).

2. Dispositif d'entraînement rotatif (18) selon la revendication 1, **caractérisé en ce qu'**en outre une résistance (R1) est montée en série avec les diodes de Zener (D1, D2).

3. Dispositif d'entraînement rotatif (18) selon la revendication 2, **caractérisé en ce que** la résistance (R1) présente une valeur de résistance réglable.

4. Dispositif d'entraînement rotatif (18) selon l'une quelconque des revendications 1 à 3, **caractérisé en ce que** le circuit de sécurité (28) est agencé sur une platine électronique (27), dans un tube de boîtier (7) du dispositif d'entraînement rotatif (18), qui est associée à un système de capteurs de vitesse de rotation et sens de rotation, dans lequel le circuit de sécurité (28) travaille indépendamment du système de capteurs de vitesse de rotation et sens de rotation ou de leurs signaux électriques.

5. Dispositif d'entraînement rotatif (18) selon l'une quelconque des revendications 1 à 3, **caractérisé en ce que** le circuit de sécurité (28) est agencé dans une conduite d'amenée d'un dispositif d'entraînement (5) du dispositif d'entraînement rotatif (18).

6. Dispositif d'entraînement rotatif (18) selon l'une quelconque des revendications 1 à 3, **caractérisé en ce que** le circuit de sécurité (28) est agencé dans un connecteur d'une conduite d'amenée d'un système d'entraînement (5) du dispositif d'entraînement rotatif (18).

7. Dispositif d'entraînement rotatif (18) selon l'une quelconque des revendications 1 à 3, **caractérisé en ce que** le circuit de sécurité (28) est agencé sur une platine de moteur présente.

8. Dispositif d'entraînement rotatif (18) selon l'une quelconque des revendications 1 à 3, **caractérisé en ce que** le circuit de sécurité est agencé dans le moteur (19).
